# EUROPÄISCHE PATENTSCHRIFT

(11) **EP 2 965 341 B1**
(45) Veröffentlichungstag und Bekanntmachung des Hinweises auf die Patenterteilung: **06.05.2020**
(21) Anmeldenummer: 14719180.3
(22) Anmeldetag: 03.03.2014
(51) Int. Cl.: H01J 35/06

(54) **RÖNTGENKATHODENFILAMENT**
X-RAY CATHODE FILAMENT
FILAMENT CATHODIQUE DE TUBE À RAYONS X

(30) Priorität: 06.03.2013 AT 742013 U
(43) Veröffentlichungstag der Anmeldung: 13.01.2016
(73) Patentinhaber: Plansee SE, 6600 Reutte (AT)
(72) Erfinder: REHEIS, Nikolaus, A-6474 Jerzens 10 (AT); KÖGL, Markus, A-6682 Vils (AT); SPIELMANN, Wolfgang, A-6632 Ehrwald (AT); POHL, Peter, A-6493 Mils bei Imst (AT)
(74) Vertreter: Ciesla, Bettina
(86) Internationale Anmeldenummer: PCT/AT2014/000043
(87) Internationale Veröffentlichungsnummer: WO 2014/134644

(56) Entgegenhaltungen:
- CN-Y- 201 188 411
- DE-A1- 4 035 361
- US-A1- 2003 141 797

## Beschreibung

Die vorliegende Erfindung betrifft ein Filament, insbesondere ein Röntgenkathodenfilament, welches mindestens ein Emitter- oder Heizfilament aus einem W- basierten Werkstoff mit abstehenden Drahtendabschnitten und den Drahtendabschnitten jeweils zugeordnete Halterungsstifte aus einem hochschmelzenden Metall oder einer hochschmelzenden Metalllegierung zur Fixierung und elektrischen Kontaktierung der Drahtendabschnitte aufweist. Dabei weist mindestens ein Halterungsstift stirnseitig eine Aufnahme auf, in der ein Drahtendabschnitt aufgenommen ist und innerhalb der Aufnahme stoffschlüssig mit dem Halterungsstift verbunden ist. Die Erfindung betrifft ferner ein Herstellungsverfahren für ein derartiges Filament.

Derartige Röntgenkathodenfilamente werden in Röntgenröhren zur Emission von Elektronen eingesetzt. Sie weisen in der Regel ein Heizfilament (z.B. eine Drahtwendel mit abstehenden Drahtendabschnitten) auf, das im Einsatz mit elektrischem Strom beaufschlagt wird. Dadurch werden Elektronen entweder direkt von einem Elektronen emittierenden Abschnitt des Heizfilaments (im Falle eines direkt beheizten Röntgenkathodenfilaments) oder von einem, durch das Heizfilament beheizten Bauteil (im Falle einer indirekten Beheizung) emittiert. Die emittierten Elektronen werden in Form eines fokussierten Elektronenstrahls auf eine entsprechende Röntgenanode beschleunigt. Ein Großteil der Energie des Elektronenstrahls wird in der Röntgenanode in Wärme umgewandelt, während ein kleiner Anteil als Röntgenstrahlung abgestrahlt wird.

Aus der DE 40 35 361 A1 ist eine direkt geheizte Kathode bekannt, bei welcher eine aus Wolfram bestehende Kathodenwendel an Kathodenstreben aus hochschmelzendem Metall mittels punktförmig zugeführter Wärme tragend befestigt wird, wobei die Befestigung unter Verwendung von Platin als Lot vorgenommen wird. Aus der JP 8241685 A ist eine Kathodenanordnung bekannt, bei welcher die Drahtendabschnitte des Heizfilaments mittels Punktschweißen an entsprechenden, mit einem axialen Spalt versehenen Halterungsstiften befestigt werden. Dabei sind die durch den axialen Spalt erhaltenen zwei Halterungsfüße der Halterungsstifte derart ausgebildet, dass jeweils ein Fuß unverändert bleibt, während der andere durch das Punktschweißverfahren leicht verbogen wird. Aus der JP 58-90389 A ist allgemein ein Verfahren zum Verbinden eines hochschmelzenden, aus einer dünnen Platte oder einem dünnen Draht gebildeten Bauteils mittels Laserschweißen mit einem Grundmaterial aus Eisen, Nickel oder dergleichen bekannt. Dabei wird der Laserstrahl von der Seite des Grundmaterials auf das Grundmaterial gerichtet und es wird ein Materialfluss des geschmolzenen Grundmaterials erzeugt, welcher die dünne Platte oder den dünnen Draht einhüllt. Das in der JP 58-90389 A beschriebene Verfahren ist insbesondere zur Verbindung einer Heizwendel einer Elektronenröhre mit einer entsprechenden Halterung geeignet.

Aufgrund der hohen, in dem Bereich des Röntgenkathodenfilaments auftretenden Temperaturen ist das Heizfilament in der Regel aus einem W-basierten Werkstoff und die Halterungsstifte sind in der Regel aus einem hochschmelzendem Metall oder einer hochschmelzenden Metalllegierung (wie beispielsweise aus einem Mo-basierten Werkstoff) gebildet. Dabei besteht die Anforderung, dass das Heizfilament und die Halterungsstifte mechanisch stabil miteinander verbunden werden und eine gute elektrische Kontaktierung gewährleistet wird. Diese Verbindung muss dabei den hohen, im Einsatz auftretenden Temperaturen standhalten. Eine entsprechende Problematik besteht allgemein bei Filamenten, die ein Emitterfilament oder Heizfilament aus einem W-basierten Werkstoff und entsprechende Halterungsstifte aufweisen. Solche Filamente werden beispielsweise in Beleuchtungsanwendungen, für Hochtemperatur-Heizkonstruktionen, wie beispielsweise für MOCVD-Anwendungen (metallorganische chemische Gasphasenabscheidung; englisch: metal-organic chemical vapour deposition), Heizsysteme, etc., sowie als Verdampferfilamente für Beschichtungsanwendungen eingesetzt.

Dementsprechend besteht die Aufgabe der vorliegenden Erfindung darin, ein Filament, insbesondere ein Röntgenkathodenfilament, und ein Verfahren zur Herstellung eines Filaments, insbesondere eines Röntgenkathodenfilaments, bereitzustellen, bei welchem die Verbindung zwischen dem Emitter- oder Heizfilament und mindestens einem Halterungsstift derart ausgestaltet ist, dass sie auch bei den hohen, im Einsatz auftretenden Temperaturen dauerhaft eine mechanisch stabile Halterung und eine gute elektrische Kontaktierung sicherstellt.

Die Aufgabe wird durch ein Filament, insbesondere ein Röntgenkathodenfilament, gemäß Anspruch 1 sowie durch ein Verfahren zum Herstellen eines Filaments, insbesondere eines Röntgenkathodenfilaments, gemäß Anspruch 11 gelöst. Vorteilhafte Weiterbildungen der Erfindung sind in den Unteransprüchen angegeben. Solche Filamente werden beispielsweise in Beleuchtungsanwendungen, für Hochtemperatur-Heizkonstruktionen, wie beispielsweise für MOCVD-Anwendungen (metallorganische chemische Gasphasenabscheidung; englisch: metal-organic chemical vapour deposition), Heizsysteme, etc., sowie als Verdampferfilamente für Beschichtungsanwendungen eingesetzt.

Gemäß der vorliegenden Erfindung weist das Filament, insbesondere das Röntgenkathodenfilament, mindestens ein Emitter- oder Heizfilament (im Falle eines Röntgenkathodenfilaments in der Regel als Heizfilament bezeichnet) aus einem W- basierten Werkstoff (W: Wolfram), das abstehende Drahtendabschnitte (ebenfalls aus dem W-basierten Werkstoff) aufweist, und den Drahtendabschnitten jeweils zugeordnete Halterungsstifte aus einem hochschmelzenden Metall oder einer hochschmelzenden Metalllegierung zur Fixierung und elektrischen Kontaktierung der Drahtendabschnitte auf. Dabei weist mindestens ein Halterungsstift stirnseitig eine Aufnahme auf, in der ein Drahtendabschnitt aufgenommen ist und innerhalb der Aufnahme stoffschlüssig mit dem Halterungsstift verbunden ist. Die stoffschlüssige Verbindung wird über einen Zusatzwerkstoff aus V (V: Vanadium) oder einer V-basierten Legierung, der stoffschlüssig mit dem Drahtendabschnitt sowie stoffschlüssig mit dem Halterungsstift verbunden ist, hergestellt. Vorzugsweise sind sämtliche Drahtendabschnitte des mindestens einen Emitter- oder Heizfilaments durch eine derartige stoffschlüssige Verbindung mit entsprechenden Halterungsstiften verbunden. Vorzugsweise sind dabei auch die nachfolgend erläuterten Weiterbildungen und Varianten an sämtlichen, stoffschlüssigen Verbindungen zwischen den Drahtendabschnitten und den zugehörigen Halterungsstiften vorgesehen.

Indem V oder eine V-basierte Legierung als Zusatzwerkstoff eingesetzt wird, ist gegenüber einer Verbindungstechnik ohne Einsatz eines Zusatzwerkstoffes aufgrund des vergleichsweise niedrigen Schmelzpunktes von V (Schmelzpunkt: 1910 °C von reinem V) eine relativ niedrigere Temperatur zum Verbinden des Drahtendabschnittes mit dem Halterungsstift erforderlich (verglichen mit den Schmelztemperaturen von reinem W, reinem Mo sowie weiteren, hochschmelzenden Metallen, die als Material für die Halterungsstifte in Frage kommen). V zeigt dabei eine gute Benetzung des Emitter- oder Heizfilaments aus W-basiertem Werkstoff sowie der Halterungsstifte aus einem hochschmelzendem Metall oder einer hochschmelzenden Metalllegierung. Dies gilt insbesondere dann, wenn die Halterungsstifte aus Mo oder einer Mo-basierten Legierung gebildet sind.

Gegenüber einer Verwendung von Pt (Platin) als Zusatzwerkstoff hat V den Vorteil, dass es in der Regel keine intermetallischen Phasen mit den als Materialien für die Halterungsstifte in Frage kommenden, hochschmelzenden Metallen ausbildet und eine gute Mischbarkeit mit diesen aufweist. Dieser Vorteil besteht insbesondere dann, wenn die Halterungsstifte aus Mo oder einer Mo-basierten Legierung gebildet sind. Demgegenüber bildet Pt mit Mo intermetallische Phasen aus, wodurch die Stabilität der Verbindung, insbesondere bei hohen Einsatztemperaturen, herabgesetzt sein kann. Im Hinblick auf die Hochtemperaturstabilität ist ein weiterer Vorteil von V, dass es im Vergleich zu Pt einen höheren Schmelzpunkt aufweist (1910 °C bei V im Vergleich zu 1768 °C bei Pt) und dass bei Vermischung mit Mo (aufgrund von Diffusionseffekten und/oder aufgrund der Ausbildung einer Schmelzlegierung) eine Schmelzpunkterhöhung auftritt. Weitere Vorteile von V als Zusatzwerkstoff sind, dass es im Vergleich zu Pt einen niedrigeren Dampfdruck aufweist (d.h. hochvakuumkompatibel ist), dass eine ausreichende Verfügbarkeit als Rohstoff gegeben ist und dass es im Vergleich zu Pt einen deutlichen Kostenvorteil aufweist.

Röntgenkathodenfilamente sind in dem Fachgebiet allgemein bekannt und werden in Röntgenröhren zur Emission von Elektronen eingesetzt. Dabei können derartige Röntgenkathodenfilamente in Röntgenröhren unterschiedlicher Typen, wie beispielsweise in Röntgenröhren für medizinische Anwendungen, in Röntgenröhren zum Gepäckscannen (z.B. an Flughäfen), in Röntgenröhren zur Materialprüfung, etc., eingesetzt werden. Als "W-basierter Werkstoff" wird insbesondere auf reines Wolfram oder auf eine W-Legierung, die zu mindestens 50 Gew.% aus W besteht, Bezug genommen. Insbesondere besteht die W-Legierung zu mindestens 90 Gew.% aus W. Im Falle einer W-Legierung enthält diese insbesondere noch weitere Metalle, wie beispielsweise Re (Re: Rhenium), oder auch zu geringen Anteilen nicht-metallische Zusätze, wie beispielsweise Oxide, und/oder Dotierungen (z.B. mit Kalium). Das Heizfilament ist insbesondere als direkt beheiztes Heizfilament ausgebildet, d.h. dass dieses im Einsatz bei Zuführen von elektrischem Strom direkt Elektronen emittiert. Für das Heizfilament sind unterschiedliche Ausgestaltungen (verschiedene Querschnitte, ggf. über die Erstreckungslänge variierende Querschnitte, verschiedene Geometrien, insbesondere Wendelgeometrien, etc.) möglich, wie beispielsweise als Flachheizer, als Drahtfilament, etc., wobei die Ausbildung als Drahtfilament bevorzugt ist. Weist das Heizfilament eine Wendel auf, so sind unterschiedliche Wendelgeometrien möglich. Beispielsweise kann vorgesehen sein, dass ein- und dasselbe Heizfilament zwei oder mehrere ineinander integrierte Wendeln aufweist, wie es beispielsweise bei einem, mit einem ersten, kleinen Wendeldurchmesser gewickelten Draht der Fall ist, der zusätzlich noch in einer Wendelform mit einem zweiten, großen Wendeldurchmesser gewickelt ist. Weiterhin kann vorgesehen sein, dass der Wendelquerschnitt entlang der Wendelachse variiert. Entsprechende Variationsmöglichkeiten bestehen für das Emitterfilament. Ferner kann das Röntgenkathodenfilament auch zwei oder mehrere Heizfilamente aufweisen, die dann in der Regel auch jeweils separate Drahtendabschnitte und separate Halterungsstifte aufweisen. Vorzugsweise stehen die Drahtendabschnitte im Wesentlichen senkrecht zu der Haupterstreckungsrichtung des Elektronen emittierenden Abschnittes ab. Im Falle der Ausbildung des Elektronen emittierenden Abschnittes als Wendel entspricht diese Haupterstreckungsrichtung der Wendelachse. Dabei ist bevorzugt, dass die Drahtendabschnitte parallel zueinander verlaufen. Die abstehenden Drahtendabschnitte dienen dabei zur mechanischen Halterung sowie zur elektrischen Kontaktierung des Heizfilaments. Sie weisen eine längliche Haupterstreckungsrichtung auf. Vorzugsweise weisen sie einen im Wesentlichen runden Querschnitt auf. Auch hier sind entsprechende Ausgestaltungen im Falle eines Emitterfilaments möglich.

Mit "hochschmelzend" wird in dem vorliegenden Zusammenhang auf Metalle und Metalllegierungen Bezug genommen, die einen Schmelzpunkt von ≥ 2.000 °C aufweisen. Die Aufnahme ist derart ausgebildet, dass sie sich stirnseitig beginnend in axialer Richtung (des betreffenden Halterungsstifts) bis zu einer vorbestimmten Tiefe in den jeweiligen Halterungsstift erstreckt. Es wird dadurch in axialer Richtung ein Überlappungsbereich der Aufnahme mit dem entsprechenden Drahtendabschnitt bereitgestellt und der betreffende Drahtendabschnitt wird bezüglich mindestens einer, senkrecht zu der axialen Richtung verlaufenden radialen Richtung beidseitig durch die Aufnahme umgeben. Insbesondere kann die Aufnahme durch einen sich entlang der axialen Richtung erstreckenden Spalt gebildet werden. Alternativ kann die Aufnahme beispielsweise durch ein sich entlang der axialen Richtung erstreckendes Loch gebildet werden.
Als "Zusatzwerkstoff" wird ein Werkstoff bezeichnet, der zusätzlich zu dem Material des Halterungsstiftes und dem Material des Emitter- oder Heizfilaments (aus W-basiertem Werkstoff) vorgesehen ist. Mit "V oder einer V-basierten Legierung" wird insbesondere auf reines V oder eine V-Legierung, die zu mindestens 50 Gew.% aus V besteht, Bezug genommen. Insbesondere besteht die V-Legierung zu mindestens 90 Gew.% aus V. Bevorzugt ist, dass als Ausgangs-Zusatzwerkstoff (d.h. vor Aufschmelzen desselben, um die Verbindung herzustellen) reines V eingesetzt wird (mit Verunreinigungen und/oder Zusätzen bis maximal 5 Gew.%). Dabei kann aufgrund von Diffusionseffekten und/oder aufgrund der Ausbildung einer Schmelzlegierung beim Erhitzen zum Herstellen der Verbindung Material aus dem Halterungsstift und ggf. auch aus dem Drahtendabschnitt in dem Zusatzwerkstoff aufgenommen, insbesondere gelöst, sein. Material aus dem Drahtendabschnitt wird aufgrund von dessen sehr hohem Schmelzpunkt nicht oder nur zu einem sehr geringen Anteil in dem Zusatzwerkstoff aufgenommen.

Die Drahtendabschnitte bilden Teil des Emitter- oder Heizfilaments und sind aus ein- und demselben W-basierten Werkstoff gebildet. Insbesondere ist das gesamte Emitter- oder Heizfilament einstückig und aus ein- und demselben Werkstoff hergestellt, d.h. es weist keine Verbindungszonen zwischen zwei ursprünglich separat ausgebildeten Teilen auf.

Gemäß einer Weiterbildung liegt der Zusatzwerkstoff zumindest abschnittsweise in einer Schmelzphase vor. Auf diese Weise kann eine gute Benetzung des Halterungsstiftes und des Drahtendabschnittes durch den Zusatzwerkstoff erzielt werden. Dies ist vorteilhaft im Hinblick auf eine stabile, mechanische Verbindung sowie im Hinblick auf eine gute elektrische Kontaktierung. Als Schmelzphase wird dabei eine Phase bezeichnet, die durch Erstarren des betreffenden Werkstoffs aus einer Schmelze erhalten wird. Wie in dem Fachgebiet bekannt ist, kann das Vorliegen einer Schmelzphase durch metallurgische Untersuchungsmethoden erkannt werden. Eine Schmelzphase weist bei dem Erstarrungsvorgang neu gebildete Kristalle auf. Diese für eine Schmelzphase typische Mikrostruktur ist für einen Fachmann von dem vor dem Erhitzen vorliegenden Ausgangs-Zusatzwerkstoff unterscheidbar. Eine geeignete metallurgische Untersuchungsmethode zum Bestimmen, ob eine Schmelzphase vorliegt, ist, dass ein (typischerweise axialer) Querschnitt durch den Drahtendabschnitt, den Halterungsstift und den Zusatzwerkstoff hergestellt, die dabei erhaltene Oberfläche in ein Harz eingebettet, geschliffen, poliert und mit einem Rasterelektronenmikroskop (oder alternativ mit einem Lichtmikroskop) in dem Bereich des Zusatzwerkstoffes untersucht wird.

Vorzugsweise liegt der Zusatzwerkstoff zumindest in einem Kontaktbereich zwischen Halterungsstift und Drahtendabschnitt in einer Schmelzphase vor. Ein derartiges, nur lokales Aufschmelzen des Ausgangs-Zusatzwerkstoffes in dem Kontaktbereich erfolgt beispielsweise, wenn zum Verbinden ein Widerstandsschweißverfahren, insbesondere ein Widerstandspunktschweißverfahren, eingesetzt wird. Demgegenüber kann ein großflächigeres oder vollständiges Aufschmelzen des Ausgangs-Zusatzwerkstoffes erreicht werden, wenn zum Herstellen der stoffschlüssigen Verbindung die Gesamtanordnung (aus Emitteroder Heizfilament, Ausgangs-Zusatzwerkstoff und mindestens einem Halterungsstift) auf so hohe Temperaturen erwärmt wird, dass der Ausgangs-Zusatzwerkstoff aufschmilzt. Im Hinblick auf eine Vermeidung der Alterung des Emitter- oder Heizfilaments ist jedoch bevorzugt, wenn zum Herstellen der stoffschlüssigen Verbindung der Ausgangs-Zusatzwerkstoff durch ein Strahlschweißverfahren, insbesondere durch ein Laserschweißverfahren, lokal erhitzt und aufgeschmolzen wird, wobei auch bei dieser Variante ein großflächiges oder auch vollständiges Aufschmelzen des Ausgangs-Zusatzwerkstoffes erreicht werden kann.

Gemäß einer Weiterbildung benetzt der Zusatzwerkstoff zumindest über einen innerhalb der Aufnahme angeordneten, axialen Abschnitt des Drahtendabschnittes (axial: Haupterstreckungsrichtung des Drahtendabschnittes) hinweg den Drahtendabschnitt über mindestens 75% des Umfangs (des Drahtendabschnittes) und liegt zumindest in diesem Bereich in einer Schmelzphase vor. Durch eine derartige, großflächige Benetzung des Drahtendabschnittes mit dem, in einer Schmelzphase vorliegenden Zusatzwerkstoff werden ein stabiler Halt und eine gute elektrische Kontaktierung hergestellt. Eine derartige, großflächige Benetzung kann insbesondere dadurch erhalten werden, dass der an die entsprechende Position innerhalb der Aufnahme eingebrachte Ausgangs-Zusatzwerkstoff durch ein Strahlschweißverfahren (z.B. Elektronenstrahlschweißverfahren, Laserschweißverfahren) zumindest abschnittsweise aufgeschmolzen wird. Demgegenüber ist bei einem Erwärmen der Gesamtanordnung in einem Ofen auf entsprechend hohe Temperaturen eine so großflächige Benetzung nicht oder nur schwierig erhältlich, da der aufgeschmolzene Zusatzwerkstoff der Schwerkraft folgend abfließt. Der über mindestens 75 % des Umfangs benetzte, axiale Abschnitt des Drahtendabschnittes weist bevorzugt eine Länge im Bereich von 0,2 - 1,5 mm auf. Dieser Bereich gilt insbesondere bei einem axialen Überlappungsbereich zwischen Drahtendabschnitt und Aufnahme von zum Beispiel 2 mm Länge.

Gemäß einer Weiterbildung sind die Halterungsstifte aus Mo (Mo: Molybdän) oder einer Mo-basierten Legierung gebildet. Aufgrund seines hohen Schmelzpunktes ist Mo allgemein als Grundmaterial für die Halterungsstifte gut geeignet. In Kombination mit V als Zusatzwerkstoff ergibt sich der zusätzliche Vorteil, dass Mo und V über alle Zusammensetzungen hinweg ineinander löslich sind und keine intermetallischen Phasen ausbilden. Das aufgrund von Diffusionseffekten und/oder aufgrund der Ausbildung einer Schmelzlegierung in dem V gelöste Mo führt zusätzlich zu einer Schmelzpunkterhöhung des Zusatzwerkstoffes (verglichen mit dem Ausgangs-Zusatzwerkstoff), was im Hinblick auf die Hochtemperaturstabilität der Verbindung von Vorteil ist. Mit "Mo-basiert" wird auf eine Legierung Bezug genommen, die zu ≥ 50 Gew.%, insbesondere zu ≥ 90 Gew.% Mo aufweist. Im Falle einer Mo-Legierung enthält diese insbesondere noch weitere Metalle oder auch zu geringen Anteilen nicht-metallische Zusätze, wie beispielsweise Oxide, und/oder Dotierungen.

Gemäß einer Weiterbildung liegt der Zusatzwerkstoff zumindest abschnittsweise in einer Schmelzphase vor und die Schmelzphase bildet eine Schmelzlegierung, die zumindest V und Mo als Legierungsmetalle enthält. Dadurch ergeben sich die oberhalb erläuterten Vorteile. Als Schmelzlegierung wird dabei - wie in dem Fachgebiet üblich - eine durch Aufschmelzen von V und Mo und durch Durchmischen derselben erhaltene Legierung verstanden. Im Vergleich zu einer Festkörperdiffusion findet bei Ausbildung einer Schmelzlegierung eine gleichmäßigere Durchmischung von V und Mo statt. Gemäß einer Weiterbildung liegt der Zusatzwerkstoff vollständig in einer Schmelzphase vor und bildet die genannte Schmelzlegierung. Dies kann insbesondere dann erreicht werden, wenn - wie oberhalb erläutert - ein Strahlschweißverfahren (z.B. Laserschweißen, ggf. auch Elektronenstrahlschweißen) zum vollständigen Aufschmelzen des Ausgangs-Zusatzwerkstoffes und eines Teils des Halterungsstiftes sowie ggf. auch einer schmalen Randzone des Drahtendabschnittes eingesetzt wird. Eine "Schweißverbindung" gemäß der Definition von "Schweißen" liegt nur dann vor, wenn auch der Drahtendabschnitt zumindest an einer schmalen Randzone desselben aufgeschmolzen wird. Andernfalls - d.h. wenn nur der Ausgangs-Zusatzwerkstoff und ein Teil des Halterungsstiftes aufgeschmolzen werden - handelt es sich um eine Mischform zwischen Schweißen und Löten. Allgemein kann die Schmelzlegierung auch noch weitere, metallische und/oder nicht-metallische Bestandteile aufweisen, je nachdem, welche Materialien für den Ausgangs-Zusatzwerkstoff, den Halterungsstift und für die Drahtendabschnitte eingesetzt werden. Dabei ist zu berücksichtigen, dass bei Einsatz eines Strahlschweißverfahrens der nach dem Erhitzen erhaltene Zusatzwerkstoff zu dem höchsten Anteil aus dem Material des Ausgangs-Zusatzwerkstoffes bestehen sollte, in das zu einem geringeren Anteil Material (insbesondere Mo) aus dem Halterungsstift gelöst ist, und in das ggf. auch zu einem noch deutlich geringeren Anteil Material aus dem Drahtendabschnitt gelöst sein kann (z.B. aufgrund von Diffusionseffekten oder durch ein Aufschmelzen von dessen Randzone).

Gemäß einer Weiterbildung liegt der Drahtendabschnitt in dem Bereich des Austrittspunktes des Drahtendabschnittes aus der Aufnahme in einer nicht rekristallisierten Struktur vor. Vorzugsweise liegt der gesamte, innerhalb der Aufnahme befindliche Abschnitt des Drahtendabschnittes in einer nicht rekristallisierten Struktur vor. Eine derartige nicht rekristallisierte Struktur des Drahtendabschnittes ist aufgrund ihrer bevorzugten Eigenschaften (höhere Duktilität) in der Regel gewünscht. Gegebenenfalls kann der Drahtendabschnitt auch abschnittsweise innerhalb der Aufnahme in einer teilrekristallisierten Struktur vorliegen. Eine nicht rekristallisierte Struktur wird in der Regel im Rahmen des Herstellungsprozesses des Emitter- oder Heizfilaments durch Umformen (im Falle eines Drahtes: Ziehen) und moderates Glühen eingestellt. Die Rekristallisation schreitet mit zunehmender Temperatur und mit zunehmender Zeit der Erwärmung fort, bis eine vollständig rekristallisierte Struktur erhalten wird. Dementsprechend ist eine übermäßige und zu lange andauernde Erwärmung der Drahtendabschnitte im Rahmen der Herstellung der stoffschlüssigen Verbindung möglichst zu vermeiden. Die gemäß dieser Weiterbildung vorgesehene nicht rekristallisierte Struktur des Drahtendabschnittes kann insbesondere bei dem Herstellen der stoffschlüssigen Verbindung weitgehend erhalten bleiben, wenn ein Strahlschweißverfahren, vorzugsweise ein Laserschweißverfahren, zum Aufschmelzen des Ausgangs-Zusatzwerkstoffes (und ggf. eines Teils des Halterungsstiftes sowie ggf. einer schmalen Randzone des Drahtendabschnittes) eingesetzt wird. Dadurch erfolgen nur eine lokale und relativ kurzzeitige Erwärmung, so dass in dem Bereich der Drahtendabschnitte die nicht rekristallisierte Struktur weitgehend erhalten bleiben kann. Ggf. kann die Rekristallisation in der direkten Umgebung des Auftreffpunktes des Schweißstrahls (insbesondere des Lasers) etwas stärker als in den umliegenden Bereichen fortschreiten. Aufgrund der lokalen Energieeinbringung bei einem Strahlschweißverfahren kann ferner ein übermäßiges Erhitzen des Wärme abstrahlenden und/oder Elektronen emittierenden Abschnittes des Emitter- oder Heizfilaments vermieden werden.

Im Hinblick auf das Rekristallisationsverhalten ist zu beachten, dass durch den Schritt des Umformens eine Umformstruktur erhalten wird. Diese weist - wie in dem Fachgebiet bekannt ist - keine klaren, um einzelne Kristallkörner umlaufende Korngrenzen auf. Weiterhin weist sie eine Vielzahl von Versetzungen auf. Im Rahmen der Rekristallisation findet dann eine Kornneubildung statt. Hierbei entstehen zunächst kleine Kristalle mit klaren, umlaufenden Korngrenzen, die sich mit zunehmenden Rekristallisationsgrad vergrößern. Dabei wird der Anteil der Umformstruktur zunehmend reduziert, bis bei vollständig rekristallisierter Struktur keine oder nahezu keine Umformstruktur mehr zwischen den neu gebildeten Kristallen verbleibt.

Eine nicht oder nur teilrekristallisierte Struktur kann - wie in dem Fachgebiet bekannt ist - durch pulvermetallurgische Untersuchungsmethoden erkannt werden. Beispielsweise wird zur Probenpräparation ein Querschnitt durch den Drahtendabschnitt (und ggf. auch durch den umgebenden Zusatzwerkstoff und Halterungsstift) hergestellt (insbesondere in der axialen Richtung), die dabei erhaltene Oberfläche in ein Harz eingebettet, geschliffen und poliert (z.B. elektropoliert). Eine Unterscheidung zwischen einer nicht rekristallisierten, einer teilrekristallisierten und einer vollständig rekristallisierten Struktur kann in der Regel durch einen Fachmann bereits durch eine Untersuchung der vorbereiteten Proben in einem Rasterelektronenmikroskop vorgenommen werden. Eine weitergehende Charakterisierung und insbesondere eine quantitative Auswertung des Rekristallisationsgrades wird vorzugsweise mittels einer EBSD-Analyse (EBSD: Electron Backscatter Diffraction; deutsch: Elektronenrückstrahlbeugung) oder ggf. auch mittels einer ECCI-Analyse (ECCI: Electron Channeling Contrast Imaging; deutsch: Elektronen-Kanalisierungs-Kontrast-Bildgebung) der vorbereiteten Proben vorgenommen, wie es in dem Fachgebiet bekannt ist. Bei der EBSD-Analyse können die Korngrenzen insbesondere durch Angabe eines "grain tolerance angle" (deutsch: Korntoleranzwinkel), der typischerweise bei 15° liegt, sichtbar gemacht werden. Bei der ECCI-Analyse sind die Korngrenzen anhand der Kontrastunterschiede des erhaltenen Bildes sichtbar. Bei beiden Analysemethoden kann der Rekristallisationsgrad quantitativ ausgewertet werden, indem der Flächenanteil der durch Kornneubildung entstandenen Kristalle (die anhand vollständig umlaufender Korngrenzen erkennbar sind) relativ zu der Gesamtfläche bestimmt wird. In dem vorliegenden Zusammenhang wird unter einer teil-rekristallisierten Struktur eine Struktur verstanden, in der durch Kornneubildung entstandene Kristallkörner von einer Umform-Struktur umgeben sind und bei der bezüglich einer Querschnittfläche durch die teil-rekristallisierte Struktur diese Kristallkörner einen Flächenanteil im Bereich von 1-90% bilden. Liegt der Flächenanteil der durch Kornneubildung entstandenen Kristallkörner im Bereich unter 1% oder sind überhaupt keine, durch Kornneubildung entstandenen Kristallkörner in der Struktur vorhanden, so wird in dem vorliegenden Zusammenhang von einer nicht rekristallisierten Struktur ausgegangen. Liegt der Flächenanteil über 90%, so wird in dem vorliegenden Zusammenhang von einer vollständig rekristallisierten Struktur ausgegangen.

Gemäß einer Weiterbildung wird der Zusatzwerkstoff durch mindestens ein abschnittsweise in einer Schmelzphase vorliegendes Formteil gebildet, das sich innerhalb der Aufnahme über einen axialen Längenabschnitt des Drahtendabschnittes erstreckt und entlang dem axialen Längenabschnitt eine Führung für den Drahtendabschnitt innerhalb der Aufnahme bildet, wobei die stoffschlüssige Verbindung nur über einen Teilabschnitt des axialen Längenabschnittes ausgebildet ist und wobei der Teilabschnitt innerhalb der Aufnahme axial beabstandet von dem Austrittspunkt des Drahtendabschnittes aus der Führung (sowie ggf. der Aufnahme) angeordnet ist. Auf diese Weise wird eine räumliche Trennung zwischen dem Teilabschnitt des Drahtendabschnittes, in welchem im Rahmen der Herstellung der stoffschlüssigen Verbindung ein Aufschmelzen des Formteils und damit eine Reduzierung der Festigkeit des Drahtendabschnittes (aufgrund stattfindender Rekristallisationsvorgänge) erfolgt und zwischen einem Krafteinwirkungspunkt, in dem auf das Emitter- oder Heizfilament ausgeübte Biegemomente einwirken, erzielt. Gemäß einer Weiterbildung erstreckt sich das Formteil und die durch das Formteil bereitgestellte Führung bis zu dem Austrittspunkt des Drahtendabschnittes aus der Aufnahme. Vorzugsweise wird der Zusatzwerkstoff nur durch genau ein Formteil gebildet. Ggf. können aber auch mehrere Formteile, die vorzugsweise in axialer Richtung auf dem Drahtendabschnitt aufgereiht sind, vorgesehen sein.

Grundsätzlich sind für das Formteil unterschiedliche Formen möglich, wobei die Formgebung derart zu wählen ist, dass durch das betreffende Formteil über einen axialen Längenabschnitt hinweg eine Führung für den Drahtendabschnitt innerhalb der Aufnahme bereitgestellt wird. Beispielsweise kann das Ausgangs-Formteil (vor Herstellen der stoffschlüssigen Verbindung) durch eine axial geschlitzte Hülse, durch eine rohrförmige Hülse, durch mindestens zwei sich axial erstreckende Schalen, die über entsprechende Stege miteinander verbunden sind, etc., gebildet werden, wobei die Verwendung einer axial geschlitzten Hülse bevorzugt ist. Im Rahmen der Herstellung der stoffschlüssigen Verbindung wird das Ausgangs-Formteil insbesondere in dem Bereich des Teilabschnittes aufgeschmolzen, wobei die ursprüngliche Formgebung des Ausgangs-Formteils in den verbleibenden Abschnitten erhalten bleibt.

Gemäß einer Weiterbildung wird zumindest ein axialer Abschnitt des Formteils durch eine entlang der axialen Richtung geschlitzte Hülse gebildet, in welcher der Drahtendabschnitt aufgenommen ist. Für die Herstellung solch einer Ausführung wird als Ausgangs-Formteil insbesondere eine geschlitzte Hülse eingesetzt. Insbesondere wird die geschlitzte Hülse (bzw. alternativ ein anderweitig ausgestaltetes Ausgangs-Formteil) über den Drahtendabschnitt geschoben und der Drahtendabschnitt sowie die Hülse (bzw. allgemein das Ausgangs-Formteil) werden innerhalb der Aufnahme vorzugsweise derart positioniert, dass zu der Seite des Emitter- oder Heizfilaments hin das Ende der Hülse (bzw. allgemein des Ausgangs-Formteils) und das Ende der Aufnahme bündig angeordnet sind. Anschließend wird die stoffschlüssige Verbindung vorzugsweise dadurch hergestellt, dass axial beabstandet von dem Austrittspunkt des Drahtendabschnittes aus der Hülse (bzw. allgemein des Ausgangs-Formteils) innerhalb der Aufnahme in dem Bereich der herzustellenden, stoffschlüssigen Verbindung Wärme (z.B. über ein Strahlschweißverfahren) zugeführt wird und lokal in diesem Bereich der Zusatzwerkstoff (sowie ggf. umliegendes Material des Halterungsstiftes und ggf. eine schmale Randzone des Drahtendabschnittes) aufgeschmolzen wird. Auf diese Weise wird in dem Bereich, in dem der Zusatzwerkstoff aufgeschmolzen wird, eine stoffschlüssige Verbindung zwischen dem Halterungsstift und dem Drahtendabschnitt hergestellt, während in dem verbleibenden Bereichen der Zusatzwerkstoff weiterhin in Form einer geschlitzten Hülse (bzw. allgemein in der ursprünglichen Form des Ausgangs-Formteils) vorliegt und eine Führung des Drahtendabschnittes bereitstellt.

Gemäß einer Weiterbildung wird das Emitter- oder Heizfilament durch einen durchgehenden Draht gebildet. Dies bedeutet, dass der Elektronen bzw. Wärme emittierende Abschnitt und die Drahtendabschnitte aus ein- und demselben Draht ausgebildet sind. Dies ist im Hinblick auf eine einfache und kostengünstige Herstellung vorteilhaft. Der Draht muss dabei nicht zwingend einen runden Querschnitt aufweisen (z.B. auch ovaler Querschnitt, flacher Querschnitt, etc. möglich). Im Hinblick auf eine einfache und kostengünstige Herstellung ist ein runder oder im Wesentlichen runder Querschnitt bevorzugt. Gemäß einer Weiterbildung wird das Emitter- oder Heizfilament durch eine Drahtwendel mit abstehenden Drahtendabschnitten gebildet. Eine derartige Ausbildung ist im Hinblick auf eine einfache und kostengünstige Herstellung vorteilhaft. Bei der Drahtwendel sind unterschiedliche Wendelquerschnitte der Wicklung möglich (z.B. dreieckförmig, Form eines liegenden D, kreisförmig, oval, etc.). Weiterhin kann der Wendelquerschnitt entlang der Wendelachse auch variieren.

Gemäß einer Weiterbildung wird die Aufnahme durch einen stirnseitig beginnenden Spalt, der sich in radialer Richtung durchgehend und in axialer Richtung bis zu einer vorbestimmten Tiefe des Halterungsstiftes erstreckt, gebildet.

Die vorliegende Erfindung betrifft ferner ein Verfahren zum Herstellen eines Filaments, insbesondere eines Röntgenkathodenfilaments, das nachfolgende Schritte aufweist:
A) Bereitstellen von mindestens einem Emitter- oder Heizfilament aus einem W-basierten Werkstoff, das abstehende Drahtendabschnitte (ebenfalls aus dem W-basierten Werkstoff) aufweist, sowie den Drahtendabschnitten jeweils zugeordneten Halterungsstiften aus einem hochschmelzenden Metall oder einer hochschmelzenden Metalllegierung, wobei die Halterungsstifte stirnseitig jeweils eine Aufnahme aufweisen,
B) Einführen eines Drahtendabschnittes sowie eines Ausgangs-Zusatzwerkstoffes aus V oder einer V-basierten Legierung in die Aufnahme eines zugehörigen Halterungsstiftes, wobei in axialer Richtung des betreffenden Halterungsstifts ein Überlappungsbereich der Aufnahme mit dem entsprechenden Drahtendabschnitt bereitgestellt und der betreffende Drahtendabschnitt bezüglich mindestens einer, senkrecht zu der axialen Richtung verlaufenden radialen Richtung beidseitig durch die Aufnahme umgeben wird;
C) Erhitzen von zumindest einem Teil des Ausgangs-Zusatzwerkstoffes derart, dass der nach dem anschließenden Abkühlen erhaltene Zusatzwerkstoff stoffschlüssig mit dem Halterungsstift und stoffschlüssig mit dem Drahtendabschnitt verbunden ist und damit eine stoffschlüssige Verbindung zwischen Halterungsstift und Drahtendabschnitt erhalten wird.

Das erfindungsgemäße Verfahren ermöglicht eine zuverlässige und reproduzierbare Herstellung der stoffschlüssigen Verbindung. Weiterhin werden die oberhalb in Bezug auf das erfindungsgemäße Filament, insbesondere Röntgenkathodenfilament, erläuterten Vorteile erzielt. Bei dem erfindungsgemäßen Verfahren sind die oberhalb, in Bezug auf das erfindungsgemäße Filament, insbesondere Röntgenkathodenfilament, erläuterten Varianten und Weiterbildungen in entsprechender Weise realisierbar.

Mit Ausgangs-Zusatzwerkstoff wird auf den Werkstoff Bezug genommen, der zur Herstellung der stoffschlüssigen Verbindung zusätzlich zu dem Drahtendabschnitt in die Aufnahme eingebracht wird und der vor dem Schritt des Erhitzens vorliegt. Der nach dem Schritt des Erhitzens vorliegende Werkstoff wird dann als Zusatzwerkstoff bezeichnet. Dabei bestehen unterschiedliche Möglichkeiten der Einbringung des Ausgangs-Zusatzwerkstoffes, wie beispielsweise als zumindest einen axialen Längenabschnitt des Drahtendabschnittes umgebendes Ausgangs-Formteil (axial geschlitzte Hülse, rohrförmige Hülse, mindestens zwei sich axial erstreckende Schalen, die über entsprechende Stege miteinander verbunden sind, etc.), als Draht, als Plättchen oder Blech, als Paste, als Pulver, etc.. Weiterhin kann vorgesehen sein, dass die Schritte des Einführens (Schritt B)) und des Erhitzens (Schritt C)) parallel an mehreren Drahtendabschnitten und den zugehörigen Halterungsstiften durchgeführt werden. Der "Bereich der herzustellenden Verbindung" umfasst zumindest einen Teilabschnitt des axialen Überlappungsbereiches zwischen Halterungsstift und Drahtendabschnitt. Wie bereits oberhalb erläutert wurde, bestehen verschieden Möglichkeiten, den Schritt des Erhitzens durchzuführen, wie beispielsweise eine Erwärmung der Gesamtanordnung in einem Ofen oder eine bevorzugte, lokale Wärmezuführung durch ein Strahlschweißverfahren.

Gemäß einer Weiterbildung erfolgt bei dem Schritt des Erhitzens die Wärmezuführung lokal in dem Bereich der herzustellenden Verbindung, wodurch Alterungseffekte in dem Wärme abstrahlenden und/oder Elektronen emittierenden Bereich vermieden werden. Vorzugsweise erfolgt die direkte Wärmezuführung ausschließlich oder zumindest zu einem überwiegenden Anteil an den Ausgangs-Zusatzwerkstoff und/oder an einen an den Ausgangs-Zusatzwerkstoff angrenzenden Abschnitt des Halterungsstiftes, wobei in letzterem Fall der Ausgangs-Zusatzwerkstoff zumindest zu einem erheblichen Anteil durch Wärmeleitung erwärmt wird. Vorzugsweise erfolgt die direkte Wärmezuführung axial beabstandet von dem Austrittspunkt des Drahtendabschnittes aus der Hülse bzw. allgemein des Ausgangs-Formteils (z.B. über ein Strahlschweißverfahren) in dem Bereich innerhalb der Aufnahme. Vorzugsweise erfolgt die Wärmezuführung über ein Strahlschweißverfahren. Gemäß einer Weiterbildung erfolgt der Schritt des Erhitzens durch Laserschweißen. Hierdurch gelingt eine besonders effektive, lokal begrenzte Erwärmung, wobei bereits eine kurzzeitige Energiezuführung (Laserpuls) zum Aufschmelzen des Ausgangs-Zusatzwerkstoffes ausreichend ist.

Gemäß einer Weiterbildung wird der Schritt des Erhitzens ausgeführt, ohne dass der Halterungsstift und der Drahtendabschnitt durch eine Anpresskraft aneinander gepresst werden. Auf diese Weise werden im Vergleich zu einem Widerstandsschweißverfahren ein Verformen der Bauteile und/oder die Einbringung von mechanischen Spannungen vermieden. Gemäß einer Weiterbildung wird bei dem Schritt des Erhitzens Material des Halterungsstiftes (insbesondere Mo) aufgeschmolzen und es bildet mit dem Material des Ausgangs-Zusatzmaterials eine Schmelzlegierung aus. Wie oberhalb erläutert wird, können so u.a. die Vorteile einer Schmelzpunkterhöhung genutzt werden. Ggf. kann auch noch eine schmale Randzone des Drahtendabschnittes aufgeschmolzen werden, so dass dann eine "Schweißverbindung" im eigentlichen Sinne vorliegt.

Nach dem Schritt des Erhitzens (Schritt C)), insbesondere nach Durchführen des Strahlschweißverfahrens, erfolgt vorzugsweise noch eine Wärmebehandlung (Entspannungsglühen) bei moderaten Temperaturen (d.h. deutlich unterhalb der Rekristallisationstemperatur des Emitter- oder Heizfilaments), um die eingebrachten Spannungen (insbesondere Schweißspannungen) zu reduzieren. Die Wärmebehandlung kann beispielsweise in einem Temperaturbereich von 800°C - 1.000°C über eine Zeitdauer von 1 Stunde durchgeführt werden.
Weitere Vorteile und Zweckmäßigkeiten der Erfindung ergeben sich anhand der nachfolgenden Beschreibung von Ausführungsbeispielen unter Bezugnahme auf die beigefügten Figuren.

Von den Figuren zeigen:
- Fig. 1:: eine Vorderansicht eines Röntgenkathodenfilaments gemäß einer Ausführungsform der vorliegenden Erfindung;
- Fig. 2:: eine Seitenansicht des Röntgenkathodenfilaments aus Fig. 1 mit einem im Bereich der stoffschlüssigen Verbindung vergrößert dargestellten Ausschnitt;
- Fig. 3:: eine dreidimensionale Darstellung einer axial geschlitzten Hülse in Bezug auf eine zweite Ausführungsform der Erfindung;
- Fig. 4:: eine dreidimensionale Darstellung eines Teilbereichs eines Röntgenkathodenfilaments gemäß einer zweiten Ausführungsform vor Herstellung der stoffschlüssigen Verbindung; und
- Fig. 5:: eine Querschnittsdarstellung entlang der axialen Richtung und senkrecht zu der Wendelachse des in Fig. 4 dargestellten Teilbereichs.

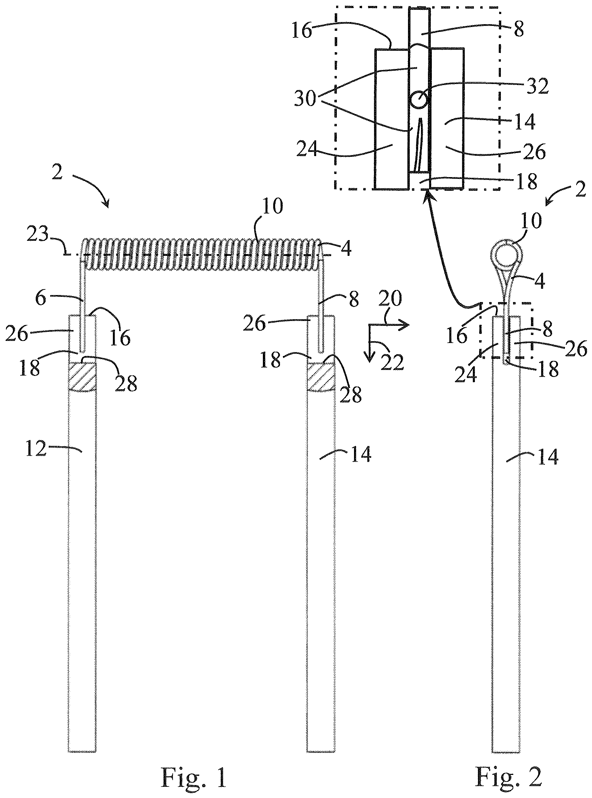

In den Fig. 1 und 2 ist ein Röntgenkathodenfilament 2 gemäß einer Ausführungsform der vorliegenden Erfindung dargestellt. Das Röntgenkathodenfilament 2 weist ein als Drahtfilament ausgebildetes Heizfilament 4 mit zwei abstehenden Drahtendabschnitten 6, 8 auf. Der Elektronen emittierende Abschnitt des Heizfilaments 4 ist dabei als Drahtwendel 10 ausgebildet, wobei die Drahtendabschnitte 6, 8 durch die abstehenden Drahtenden der Drahtwendel 10 gebildet sind. Der Draht des Heizfilaments 4 ist aus Wolfram mit entsprechenden Hochtemperatur-stabilisierenden Dotierungen (wie z.B. Kalium) gebildet. Ein geeignetes Material ist z.B. mit AKS dotiertes Wolfram, d.h. mit Aluminium, Kalium und Silizium dotiertes Wolfram. Ferner sind zwei, den beiden Drahtendabschnitten 6, 8 zugeordnete Halterungsstifte 12, 14 aus Mo vorgesehen. Sie dienen zur mechanischen Halterung sowie elektrischen Kontaktierung des Heizfilaments 4. Die Halterungsstifte 12, 14 sind jeweils von der Stirnseite 16 beginnend mit einem Spalt 18 versehen, der sich in radialer Richtung 20 vollständig durch den jeweiligen Halterungsstift 12, 14 erstreckt und der sich in axialer Richtung 22 bis zu einer vorbestimmten Tiefe erstreckt.

Die Anordnung ist dabei derart, dass die Drahtwendel 10 eine Wendelachse 23 definiert. Der Wendelquerschnitt ist bei der dargestellten Ausführungsform kreisförmig und konstant über den Verlauf der Wendelachse 23. Die Drahtendabschnitte 6, 8 stehen senkrecht von der Wendelachse 23 ab und verlaufen parallel zueinander. Die Halterungsstifte 12, 14 sind mit ihrer axialen Richtung 22 ebenfalls parallel zu den Drahtendabschnitten 6, 8 ausgerichtet.

Vorliegend weist die Drahtwendel 10 nachfolgende Abmessungen und Parameter auf:
Außendurchmesser der Drahtwendel: 1,7 mm
Steigung: 37 Windungen auf eine Gesamtlänge von 12,7 mm
Drahtdurchmesser: 0,25 mm
Gesamthöhe (Höhe der Drahtendabschnitte + Durchmesser der Wendel): 6,2 mm

Durch den Spalt 18 wird der jeweilige Halterungsstift 12 bzw. 14 in dem betreffenden Endabschnitt in zwei Halterungsfüße 24, 26 unterteilt, die sich jeweils entlang der axialen Richtung 22 erstrecken. In der Darstellung in Fig. 1 ist jeweils der zu dem Betrachter zugewandte Halterungsfuß 24 abgeschnitten dargestellt, um die Position der Drahtendabschnitte 6, 8 zu zeigen. Die Spalte 18 bilden jeweils eine Aufnahme für die Drahtendabschnitte 6, 8. Bei der dargestellten Ausführungsform sind die Drahtendabschnitte 6, 8 im Wesentlichen mittig in den Aufnahmen der Halterungsstifte 12, 14 angeordnet. Bei der dargestellten Ausführungsform erstrecken sich die Drahtendabschnitte 6, 8 nicht bis zu dem Spaltgrund 28, sondern sind etwas von diesem beabstandet. Die Drahtendabschnitte 6, 8 sind durch eine stoffschlüssige Verbindung über einen Zusatzwerkstoff 30 mit dem jeweiligen Halterungsstift 12 bzw. 14 verbunden.

Der Zusatzwerkstoff 30 liegt bei der dargestellten Ausführungsform vollständig als Schmelzphase vor. Er wird durch eine Schmelzlegierung aus V, Mo und W gebildet, wobei diese einen deutlich höheren Anteil an V und nur einen sehr geringen Anteil an W enthält (die Zusammensetzung variiert dabei über den Bereich der Schmelzlegierung, d.h. sie ist gradiert). Wie anhand des vergrößerten Ausschnittes der Fig. 2 ersichtlich ist, benetzt der Zusatzwerkstoff 30 den Drahtendabschnitt 8 über einen, innerhalb des Spaltes 18 angeordneten, axialen Abschnitt des Drahtendabschnittes 6 (welcher axiale Abschnitt dem Überlappungsbereich zwischen dem Drahtendabschnitt 8 und dem Halterungsstift 14 entspricht) hinweg über mindestens 85 % des Umfangs. Insbesondere wird der in Fig. 2 dargestellte Drahtendabschnitt 8 an einem oberen, axialen Abschnitt vollumfänglich durch den Zusatzwerkstoff 30 benetzt, während er an einem unteren, axialen Abschnitt zu einem Anteil von mindestens 85 % des Umfangs benetzt wird. Auch die Innenwand der Halterungsfüße 24, 26 wird jeweils zumindest über die Breite des Drahtendabschnittes 6, 8 und über die Länge des axialen Abschnittes hinweg durch den Zusatzwerkstoff benetzt.

Zur Herstellung der stoffschlüssigen Verbindung wird ein Laserschweißverfahren eingesetzt. Ein Ausführungsbeispiel für ein derartiges Herstellungsverfahren wird nachfolgend beschrieben. Aufgrund der kurzzeitigen und nur lokalen Erwärmung verbleiben die Drahtendabschnitte zumindest in dem Bereich des Austrittspunktes des Drahtendabschnittes 8 aus dem Spalt 18 in einer nicht rekristallisierten Struktur.

Es wird das oberhalb beschriebene Heizfilament 4 in den stirnseitig bearbeiteten Spalt 18 (Spaltbreite: 0,3 mm) der Halterungsstifte 12, 14 eingebracht. Die Halterungsstifte 12, 14 weisen jeweils einen Durchmesser von 1,5 mm und eine Länge von 24 mm auf. Zur präzisen und stabilen Positionierung der Einzelteile zueinander wird eine Montagevorrichtung verwendet, die auch zur Aufnahme und Fixierung des drahtförmigen Ausgangs-Zusatzwerkstoffes (bildet einen Schweißzusatzwerkstoff für das Laserschweißverfahren) geeignet ist. Als Ausgangs-Zusatzwerkstoff wird ein Drahtstück aus reinem Vanadium mit einem Durchmesser von 0,25 mm und einer Länge von 2 mm verwendet.

Nach der Montage der gereinigten Einzelteile in die Schweißvorrichtung wird die Schweißanordnung auf dem Koordinatentisch einer Laserschweißanlage mit dem Justierlaser auf die genaue Schweißposition einjustiert. Dabei wird der Laserstrahl entlang der radialen Richtung 20 und parallel zu der Erstreckungsrichtung des Spaltes 18 mittig (bzgl. der axialen Richtung des Spaltes) auf den, innerhalb des Spaltes 18 angeordneten Ausgangs-Zusatzwerkstoff gerichtet. Der Auftreffpunkt 32 des Laserstrahls ist dabei schematisch in Fig. 2 eingezeichnet. Der Fokus des Laserstrahls liegt 5 mm radial beabstandet zum Drahtendabschnitt 8, der die axiale Richtung definiert (d.h. der Fokus liegt im materialfreien Raum). Für den Laserschweißvorgang wird ein gepulster Yb: YAG - Scheibenlaser (Yb: Ytterbium; YAG: Yttrium-Aluminium-Granat) mit einer Wellenlänge von 1030 nm (nm: Nanometer) eingesetzt. Die eingestellten Laserparameter umfassen 200 W (W: Watt) Strahlleistung und eine Pulslänge von 800 ms (Millisekunden). Es wird eine stationäre Laseroptik mit einer Brennweite von 200 mm eingesetzt. Der Schweißvorgang wird unter Schutzgasatmosphäre durchgeführt. Vorliegend wird Argon als Schutzgas verwendet.

Durch den Laserschweißvorgang werden der Ausgangs-Zusatzwerkstoff im Wesentlichen vollständig und ein Teil des Materials der Halterungsstifte 12, 14 (insbesondere im Bereich des Auftreffpunktes des Laserstrahls) sowie ggf. eine schmale Randzone des Drahtendabschnittes 8 aufgeschmolzen. Bei der Durchführung des Laserschweißverfahrens ist darauf zu achten, dass bei dem Drahtendabschnitt 8 allenfalls eine schmale Randzone aufgeschmolzen wird, um diesen möglichst wenig zu schwächen. Dadurch bildet sich eine Schmelze, die V aus dem Ausgangs-Zusatzwerkstoff und Mo aus den Halterungsstiften 12, 14 sowie ggf. W aus dem Drahtendabschnitt 8 enthält. Nach Erstarren derselben wird der oberhalb beschriebene Zusatzwerkstoff erhalten, der eine Schmelzlegierung, die V und Mo sowie ggf. zu einem geringen Anteil W enthält, bildet. Anschließend wird ein Entspannungsglühen bei 1.000 °C über 1 Stunde durchgeführt.

Nach dem Laserschweißen werden die hergestellten Röntgenkathodenfilamente 2 jeweils einer Bauteilprüfung unterzogen. Dabei können im Rahmen einer visuellen Prüfung äußere Qualitätsmerkmale der Schweißverbindung beurteilt werden, wie z.B. Riss- bzw. Porenbildung, Benetzung und Spaltfüllung mit dem Zusatzwerkstoff. In weiteren Untersuchungen werden die Mikrostruktur der Schweißzone und die Festigkeit der Schweißverbindung durch Zugversuche sowie Biegeversuche beurteilt. Je nach konkreter Ausgestaltung des Heizfilaments und der Halterungsstifte können in Abhängigkeit von diesen Untersuchungen die Parameter des Schweißvorgangs und/oder die Menge und Anbringung des Ausgangs-Zusatzmaterials noch optimiert werden.

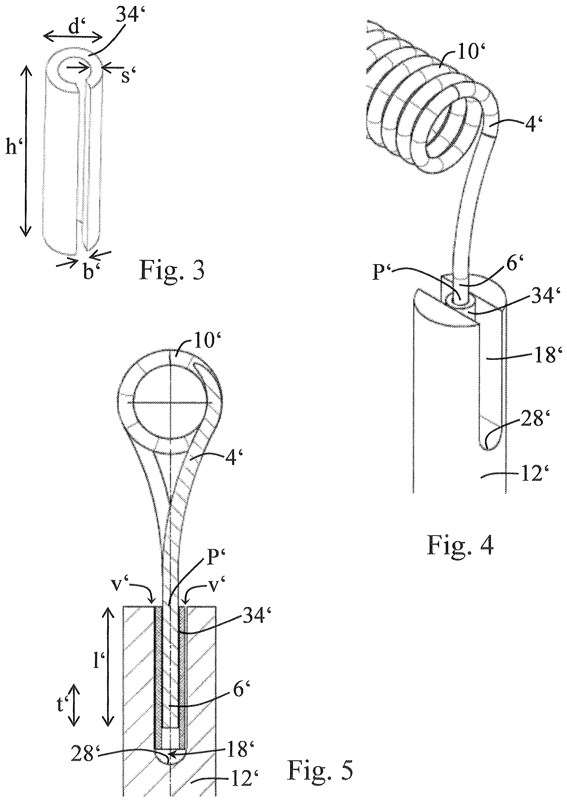

Nachfolgend wird unter Bezugnahme auf die Fig. 3 bis 5 eine zweite Ausführungsform der vorliegenden Erfindung erläutert. Dabei wird vorwiegend auf die Unterschiede gegenüber der ersten Ausführungsform, die unter Bezugnahme auf die Fig. 1 und 2 erläutert wurde, eingegangen. Für gleiche oder einander entsprechende Bauteile werden die gleichen Bezugszeichen verwendet, wobei diese jeweils mit einem zusätzlichen Strich versehen sind.

Im Unterschied zu der ersten Ausführungsform wird als Ausgangs-Zusatzwerkstoff ein Ausgangs-Formteil in Form einer axial geschlitzten Hülse 34' aus Vanadium eingesetzt. Diese ist in Fig. 3 vergrößert dargestellt. Allgemein sind für eine axial geschlitzte Hülse 34' insbesondere eine Höhe h' im Bereich von 1,5 - 3,0 mm, insbesondere im Bereich von 2,0 - 2,5 mm (vorliegend beispielsweise 2,2 mm), und eine Wandstärke s' von 20 - 150 µm, insbesondere im Bereich von 50 - 100 µm (vorliegend beispielsweise 90 µm), geeignet. Der Außendurchmesser d' wird derart gewählt, dass in einer Einsatzstellung, in welcher die Hülse 34' über den zugehörigen Drahtendabschnitt 6' geschoben und die Anordnung innerhalb der Aufnahme (vorliegend: Spalt 18') positioniert ist, beidseitig jeweils ein Spielraum (in radialer Richtung) v' von ca. 10 - 30 µm (vorliegend beispielsweise 20 µm) gegeben ist. Die Spaltbreite b' beträgt im entspannten Zustand einige Mikrometer (z.B. im Bereich von 5 - 50 µm, vorliegend ca. 5 µm) und die Hülse 34' ist derart ausgelegt, dass der Spalt dann, wenn die Hülse 34' über den zugehörigen Drahtendabschnitt 6' geschoben ist, nur geringfügig aufgeweitet wird.
Im Rahmen der Herstellung der stoffschlüssigen Verbindung wird zunächst eine Anordnung, wie sie in den Figuren 4 und 5 dargestellt ist, hergestellt. Hierzu wird die Hülse 34' über den zugehörigen Drahtendabschnitt 6' geschoben. Dann werden diese in den Spalt 18' eingeführt, bis das obere (d.h. zu der Seite der Drahtwendel 10' hin ausgerichtete) Ende der Hülse 34' und das obere (d.h. zu der Seite der Drahtwendel 10' hin ausgerichtete) Ende des Spaltes 18' bündig angeordnet sind. Zu der Seite des Spaltgrundes 28' hin steht das untere Ende der Hülse 34' etwas über das untere Ende des Drahtendabschnittes 6' über.

Die Herstellung einer stoffschlüssigen Verbindung erfolgt, indem in einer Laserschweißanlage mittels eines Laserstrahls lokal in dem Bereich der herzustellenden, stoffschlüssigen Verbindung Wärme zugeführt wird. Der Laserstrahl wird hierzu parallel zu oder leicht schräg zu der Spaltrichtung in den Spalt 18' derart gerichtet, dass der Fokus auf Material des angrenzend an die Hülse 34' angeordneten Halterungsstiftes 12' und/oder auf Material der Hülse 34' gerichtet ist. Der Fokus ist dabei axial von dem oberen Ende des Spaltes 18' in Richtung zu dem Spaltgrund 28' hin versetzt. Je nach Wandstärke der Hülse 34' kann dabei auch eine etwas geringere Strahlleistung als bei der ersten Ausführungsform und/oder eine kürzere Behandlungszeit gewählt werden. Die Strahlleistung und Behandlungszeit werden derart gewählt, dass bezogen auf einen axialen Längenabschnitt I', über welchen sich der Drahtendabschnitt 6' und die Hülse 34' überlappen, nur über einen Teilabschnitt t' des axialen Längenabschnitts I' Material der Hülse 34' und zu einem geringeren Anteil Material des Halterungsstiftes 12' sowie ggf. zu einem noch geringeren Anteil Material aus einer Randzone des Drahtendabschnittes 6' aufgeschmolzen werden und dadurch die stoffschlüssige Verbindung über die Länge des Teilabschnittes t' hergestellt wird. Insbesondere weist der Teilabschnitt t' eine Länge von 0,2 - 1,5 mm (vorliegend 0,7 mm) auf und erstreckt sich bis zu dem unteren (d.h. zu dem Spaltgrund 28' hin ausgerichteten) Ende des Drahtendabschnittes 6'. Dabei kann auch Material der Hülse 34' bis hinunter in den Spaltgrund 28' fließen und das untere Ende des Drahtendabschnittes 6' einbetten. Durch die Wärmezuführung wird die Festigkeit des Materials des Drahtendabschnittes 6' lokal in dem Bereich des Teilabschnittes t' etwas reduziert (aufgrund stattfindender Rekristallisationsvorgänge). Indem gemäß der zweiten Ausführungsform aufgrund der Führung durch die Hülse 34' dieser leicht geschwächte Bereich des Drahtendabschnittes 6' beabstandet von dem Krafteinwirkungspunkt P', in dem auf das Heizfilament 4' und insbesondere auf die Drahtwendel 10' ausgeübte Biegemomente einwirken, ist, wird das Risiko von Ermüdungserscheinungen und insbesondere Ermüdungsbrüchen des Drahtendabschnittes 6' reduziert.

## Patentansprüche

1. Filament, insbesondere Röntgenkathodenfilament, aufweisend mindestens ein Emitter- oder Heizfilament (4; 4') aus einem W- basierten Werkstoff mit abstehenden Drahtendabschnitten (6, 8; 6') und den Drahtendabschnitten (6, 8; 6') jeweils zugeordnete Halterungsstifte (12, 14; 12') aus einem hochschmelzenden Metall oder einer hochschmelzenden Metalllegierung zur Fixierung und elektrischen Kontaktierung der Drahtendabschnitte (6, 8; 6'), wobei mindestens ein Halterungsstift (12, 14; 12') stirnseitig eine Aufnahme (18; 18') aufweist, in der ein Drahtendabschnitt (6, 8; 6') aufgenommen ist und innerhalb der Aufnahme (18; 18') stoffschlüssig mit dem Halterungsstift (12, 14; 12') verbunden ist,
wobei in axialer Richtung (22) des betreffenden Halterungsstifts (12, 14; 12') ein Überlappungsbereich der Aufnahme (18; 18') mit dem entsprechenden Drahtendabschnitt (6, 8; 6') bereitgestellt und der betreffende Drahtendabschnitt (6, 8; 6') bezüglich mindestens einer, senkrecht zu der axialen Richtung verlaufenden radialen Richtung (20) beidseitig durch die Aufnahme (18; 18') umgeben wird,
**dadurch gekennzeichnet, dass**
die stoffschlüssige Verbindung über einen Zusatzwerkstoff (30) aus V oder einer V-basierten Legierung, der stoffschlüssig mit dem Drahtendabschnitt (6, 8; 6') sowie stoffschlüssig mit dem Halterungsstift (12, 14; 12') verbunden ist, hergestellt wird.

2. Filament gemäß Anspruch 1, **dadurch gekennzeichnet, dass** der Zusatzwerkstoff (30) zumindest abschnittsweise in einer Schmelzphase vorliegt.

3. Filament gemäß Anspruch 1 oder 2, **dadurch gekennzeichnet, dass** der Zusatzwerkstoff (30) zumindest über einen innerhalb der Aufnahme (18; 18') angeordneten, axialen Abschnitt des Drahtendabschnittes (6, 8; 6') hinweg den Drahtendabschnitt (6, 8; 6') über mindestens 75% des Umfangs benetzt und zumindest in diesem Bereich in einer Schmelzphase vorliegt.

4. Filament gemäß einem der vorangehenden Ansprüche, **dadurch gekennzeichnet, dass** die Halterungsstifte (12, 14; 12') aus Mo oder einer Mo-basierten Legierung gebildet sind.

5. Filament gemäß einem der vorangehenden Ansprüche, **dadurch gekennzeichnet, dass** der Zusatzwerkstoff (30) zumindest abschnittsweise in einer Schmelzphase vorliegt und dass die Schmelzphase eine Schmelzlegierung bildet, die zumindest V und Mo als Legierungsmetalle enthält.

6. Filament gemäß einem der vorangehenden Ansprüche, **dadurch gekennzeichnet, dass** der Drahtendabschnitt (6, 8; 6') in dem Bereich des Austrittspunktes des Drahtendabschnittes (6, 8; 6') aus der Aufnahme (18; 18') in einer nicht rekristallisierten Struktur vorliegt.

7. Filament gemäß einem der vorangehenden Ansprüche, **dadurch gekennzeichnet, dass** der Zusatzwerkstoff durch mindestens ein abschnittsweise in einer Schmelzphase vorliegendes Formteil (34') gebildet wird, das sich innerhalb der Aufnahme (18') über einen axialen Längenabschnitt (l') des Drahtendabschnittes (6') erstreckt und entlang dem axialen Längenabschnitt (l') eine Führung für den Drahtendabschnitt (6') innerhalb der Aufnahme (18') bildet, wobei die stoffschlüssige Verbindung nur über einen Teilabschnitt (t') des axialen Längenabschnittes (l') ausgebildet ist und wobei der Teilabschnitt (t') innerhalb der Aufnahme (18') axial beabstandet von dem Austrittspunkt des Drahtendabschnittes (6') aus der Führung angeordnet ist.

8. Filament gemäß Anspruch 7, **dadurch gekennzeichnet, dass** zumindest ein axialer Abschnitt des Formteils durch eine entlang der axialen Richtung geschlitzte Hülse (34') gebildet wird, in welcher der Drahtendabschnitt (6') aufgenommen ist.

9. Filament gemäß einem der vorangehenden Ansprüche, **dadurch gekennzeichnet, dass** das Emitter- oder Heizfilament (4; 4') durch eine Drahtwendel (10; 10') mit abstehenden Drahtendabschnitten (6, 8; 6') gebildet wird.

10. Filament gemäß einem der vorangehenden Ansprüche, **dadurch gekennzeichnet, dass** die Aufnahme durch einen stirnseitig beginnenden Spalt (18; 18'), der sich in radialer Richtung (20) durchgehend und in axialer Richtung (22) bis zu einer vorbestimmten Tiefe des Halterungsstiftes (12, 14; 12') erstreckt, gebildet wird.

11. Verfahren zum Herstellen eines Filaments, insbesondere eines Röntgenkathodenfilaments (2), aufweisend nachfolgende Schritte:
A) Bereitstellen von mindestens einem Emitter- oder Heizfilament (4; 4') aus einem W-basierten Werkstoff mit abstehenden Drahtendabschnitten (6, 8; 6') sowie den Drahtendabschnitten (6, 8; 6') jeweils zugeordneten Halterungsstiften (12, 14; 12') aus einem hochschmelzenden Metall oder einer hochschmelzenden Metalllegierung, wobei die Halterungsstifte (12, 14; 12') stirnseitig jeweils eine Aufnahme (18; 18') aufweisen,
B) Einführen eines Drahtendabschnittes (6, 8; 6') sowie eines Ausgangs-Zusatzwerkstoffes (34') aus V oder einer V-basierten Legierung in die Aufnahme (18; 18') eines zugehörigen Halterungsstiftes (12, 14; 12'),
wobei in axialer Richtung (22) des betreffenden Halterungsstifts (12, 14; 12') ein Überlappungsbereich der Aufnahme (18; 18') mit dem entsprechenden Drahtendabschnitt (6, 8; 6') bereitgestellt und der betreffende Drahtendabschnitt (6, 8; 6') bezüglich mindestens einer, senkrecht zu der axialen Richtung verlaufenden radialen Richtung (20) beidseitig durch die Aufnahme (18; 18') umgeben wird;
C) Erhitzen von zumindest einem Teil des Ausgangs-Zusatzwerkstoffes (34') derart, dass der nach dem anschließenden Abkühlen erhaltene Zusatzwerkstoff (30) stoffschlüssig mit dem Halterungsstift (12, 14; 12') und stoffschlüssig mit dem Drahtendabschnitt (6, 8; 6') verbunden ist und damit eine stoffschlüssige Verbindung zwischen Halterungsstift (12, 14; 12') und Drahtendabschnitt (6, 8; 6') erhalten wird.

12. Verfahren gemäß Anspruch 11, wobei bei dem Schritt des Erhitzens die Wärmezuführung lokal in dem Bereich der herzustellenden Verbindung erfolgt.

13. Verfahren gemäß Anspruch 11 oder 12, wobei der Schritt des Erhitzens durch Laserschweißen erfolgt.

14. Verfahren gemäß einem der Ansprüche 11 bis 13, wobei der Schritt des Erhitzens ausgeführt wird, ohne dass der Halterungsstift (12, 14; 12') und der Drahtendabschnitt (6, 8; 6') durch eine Anpresskraft aneinander gepresst werden.

15. Verfahren gemäß einem der Ansprüche 11 bis 14, wobei bei dem Schritt des Erhitzens Material des Halterungsstiftes (12, 14; 12') aufgeschmolzen wird und mit dem Material des Ausgangs-Zusatzmaterials (34') eine Schmelzlegierung ausbildet.

## Claims

1. A filament, in particular an X-ray cathode filament, which has at least one emitter filament or heating filament (4; 4') produced from a W-based material with protruding wire end sections (6, 8; 6') and mounting pins (12, 14; 12') produced from a high melting point metal or a high melting point metal alloy associated with the respective wire end sections (6, 8; 6') in order to fix the wire end sections (6, 8; 6') and produce an electrical contact, wherein the end face of at least one mounting pin (12, 14; 12') has a receptacle (18; 18') in which a wire end section (6, 8; 6') is accommodated, and the wire end section is metallurgically bonded to the mounting pin (12, 14; 12') within the receptacle (18; 18'),
wherein in the axial direction (22) of the relevant mounting pin (12, 14; 12'), a region is provided where the receptacle (18; 18') is overlapped with the relevant wire end section (6, 8; 6') and the relevant wire end section (6, 8; 6') is surrounded by the receptacle (18; 18') on both sides with respect to at least one radial direction (20) which runs perpendicular to the axial direction,
**characterized in that**
the metallurgical bond is produced via a filler material (30) produced from V or a V-based alloy which is metallurgically bonded to the wire end section (6, 8; 6') as well as metallurgically bonded to the mounting pin (12, 14; 12').

2. The filament as claimed in claim 1, **characterized in that** at least sections of the filler material (30) are present as a melted phase.

3. The filament as claimed in claim 1 or claim 2, **characterized in that** the filler material (30) wets the wire end section (6, 8; 6') over at least an axial section of the wire end section (6, 8; 6') within the receptacle (18; 18') over at least 75 % of the perimeter and is present as a melted phase at least in this region.

4. The filament as claimed in one of the preceding claims, **characterized in that** the mounting pins (12, 14; 12') are produced from Mo or a Mo-based alloy.

5. The filament as claimed in one of the preceding claims, **characterized in that** at least sections of the filler material (30) are present as a melted phase and **in that** the melted phase forms a fusible alloy which contains at least V and Mo as alloying metals.

6. The filament as claimed in one of the preceding claims, **characterized in that** in the region of the point where the wire end section (6, 8; 6') exits the receptacle (18; 18'), the wire end section (6, 8; 6') has a non-recrystallized structure.

7. The filament as claimed in one of the preceding claims, **characterized in that** the filler material is formed by at least one shaped part (34') which is present in sections in a melted phase which extends within the receptacle (18') over an axial longitudinal section (I') of the wire end section (6') and forms a duct for the wire end section (6') within the receptacle (18') along the axial longitudinal section (I'), wherein the metallurgical bond is formed over only a sub-section (t') of the axial longitudinal section (I') and wherein the sub-section (t') within the receptacle (18') is disposed at an axial distance from the point at which the wire end section (6') exits the duct.

8. The filament as claimed in claim 7, **characterized in that** at least one axial section of the shaped part is formed by a sleeve (34') which is slit along the axial direction, in which the wire end section (6') is accommodated.

9. The filament as claimed in one of the preceding claims, **characterized in that** the emitter filament or heating filament (4; 4') is formed by a wire coil (10; 10') with protruding wire end sections (6, 8; 6').

10. The filament as claimed in one of the preceding claims, **characterized in that** the receptacle is formed by a gap (18; 18') which begins on the end face which extends right through in the radial direction (20) and extends to a predetermined depth of the mounting pin (12, 14; 12') in the axial direction (22).

11. A method for the production of a filament, in particular an X-ray cathode filament (2), having the following steps:
A) providing at least one emitter filament or heating filament (4; 4') produced from a W-based material with protruding wire end sections (6, 8; 6'), as well as mounting pins (12, 14; 12') produced from a high melting point metal or a high melting point metal alloy associated with the respective wire end sections (6, 8; 6'), wherein the end face of each mounting pin (12, 14; 12') has a receptacle (18; 18'),
B) introducing a wire end section (6, 8; 6') as well as a starting filler material (34') produced from V or a V-based alloy into the receptacle (18; 18') of an associated mounting pin (12, 14; 12'), whereupon in the axial direction (22) of the relevant mounting pin (12, 14; 12') a region is provided where the receptacle (18; 18') is overlapped with the relevant wire end section (6, 8; 6') and the relevant wire end section (6, 8; 6') is surrounded by the receptacle (18; 18') on both sides with respect to at least one radial direction (20) which runs perpendicular to the axial direction;
C) heating at least a portion of the starting filler material (34') in a manner such that the filler material (30) obtained after subsequent cooling is metallurgically bonded to the mounting pin (12, 14; 12') and metallurgically bonded to the wire end section (6, 8; 6'), and thus a metallurgical bond is obtained between the mounting pin (12, 14; 12') and the wire end section (6, 8; 6').

12. The method as claimed in claim 11 wherein, during the heating step, the heat is supplied locally to the region of the bond to be produced.

13. The method as claimed in claim 11 or claim 12, wherein the heating step is carried out by laser welding.

14. The method as claimed in one of claims 11 to 13, wherein the heating step is carried out without pressing the mounting pin (12, 14; 12') and the wire end section (6, 8; 6') together using a pressing force.

15. The method as claimed in one of claims 11 to 14, wherein in the heating step, material of the mounting pin (12, 14; 12') is melted and a fusible alloy is formed with the material of the starting filler material (34').

## Revendications

1. Filament, notamment filament cathodique de tube à rayon X, présentant au moins un filament émetteur ou chauffant (4 ; 4') composé d'une matière de base en W avec des sections d'extrémité de fil (6, 8 ; 6') distantes et les tiges de fixation (12, 14 ; 12') respectivement associées aux sections d'extrémité de fil (6, 8 ; 6') et composées d'un métal à point de fusion élevé ou d'un alliage métallique à point de fusion élevé pour la fixation et la mise en contact électrique des sections d'extrémité de fil (6, 8 ; 6'), au moins une tige de fixation (12, 14 ; 12') comportant sur le côté avant un logement (18 ; 18') dans lequel une section d'extrémité de fil (6, 8 ; 6') est reçue et reliée à la tige de fixation (12, 14 ; 12') à l'intérieur du logement (18 ; 18'), par complémentarité de matières,
dans la direction axiale (22) de la tige de fixation (12, 14 ; 12') concernée, une zone de chevauchement du logement (18; 18') étant mise à disposition avec la section d'extrémité de fil (6, 8 ; 6') correspondante et la section d'extrémité de fil (6, 8 ; 6') concernée étant entourée des deux côtés par le logement (18; 18'), par rapport à au moins une direction radiale (20) s'étendant perpendiculairement à la direction axiale ;
**caractérisé en ce que**
la liaison réalisée par complémentarité de matières est réalisée via une matière supplémentaire (30) composée de V ou d'un alliage à base de V relié par complémentarité de matières à la section d'extrémité de fil (6, 8 ; 6') ainsi que par complémentarité de matières à la tige de fixation (12, 14 ; 12').

2. Filament selon la revendication 1, **caractérisé en ce que** la matière supplémentaire (30) est au moins présente par sections dans une phase en fusion.

3. Filament selon la revendication 1 ou 2, **caractérisé en ce que** la matière supplémentaire (30) est au moins réticulée sur au moins 75 % du périmètre sur une section axiale, disposée à l'intérieur du logement (18 ; 18'), de la section d'extrémité de fil (6, 8; 6'), par-dessus la section d'extrémité de fil (6, 8 ; 6'), et est au moins présent dans une phase en fusion dans cette zone.

4. Filament selon l'une quelconque des revendications précédentes, **caractérisé en ce que** les tiges de fixation (12, 14 ; 12') sont formées de Mo ou d'un alliage à base de Mo.

5. Filament selon l'une quelconque des revendications précédentes, **caractérisé en ce que** de la matière supplémentaire (30) est présente au moins par sections dans une phase en fusion et que la phase en fusion forme un alliage fondu contenant au moins V et Mo comme métaux d'alliage.

6. Filament selon l'une quelconque des revendications précédentes, **caractérisé en ce que** la section d'extrémité de fil (6, 8 ; 6') est présente dans une structure non recristallisée dans la zone du point de sortie de la section d'extrémité de fil (6, 8 ; 6') située hors du logement (18 ; 18').

7. Filament selon l'une quelconque des revendications précédentes, **caractérisé en ce que** la matière supplémentaire est formée par au moins une pièce moulée (34') présente par sections dans une phase en fusion, cette pièce s'étendant à l'intérieur du logement (18') sur une section de longueur axiale (l') de la section d'extrémité de fil (6') et formant le long de la section de longueur axiale (l') un guide pour la section d'extrémité de fil (6') à l'intérieur du logement (18'), la liaison réalisée par complémentarité de matières n'étant réalisée que sur une section partielle (t') de la section de longueur axiale (l') et la section partielle (t') étant disposée à l'intérieur du logement (18') dans le plan axial à une certaine distance du point de sortie de la section d'extrémité de fil (6') sortant hors du guide.

8. Filament selon la revendication 7, **caractérisé en ce qu'**au moins une section axiale de la pièce moulée est formée par un fourreau (34') fendu le long de la direction axiale dans lequel la section d'extrémité de fil (6') est logée.

9. Filament selon l'une quelconque des revendications précédentes, **caractérisé en ce que** le filament émetteur ou chauffant (4 ; 4') est formé par un boudin (10 ; 10') avec des sections d'extrémité de fil (6, 8 ; 6') saillantes.

10. Filament selon l'une quelconque des revendications précédentes, **caractérisé en ce que** le logement est formé par une fente (18; 18') commençant sur le côté avant et s'étendant de façon traversante dans la direction radiale (20) et s'étendant dans la direction axiale (22) jusqu'à une profondeur prédéfinie de la tige de fixation (12, 14 ; 12').

11. Procédé de fabrication d'un filament, notamment d'un filament cathodique de tube à rayon X (2), comportant les étapes suivantes:
A) mise à disposition d'au moins un filament émetteur ou chauffant (4 ; 4') composé d'une matière de base en W avec des sections d'extrémité de fil (6, 8; 6') distantes ainsi que des tiges de fixation (12, 14; 12') respectivement associées aux sections d'extrémité de fil (6, 8 ; 6') et composées d'un métal à point de fusion élevé ou d'un alliage métallique à point de fusion élevé, les tiges de fixation (12, 14; 12') comportant respectivement un logement (18 ; 18') sur le côté avant;
B) introduction d'une section d'extrémité de fil (6, 8 ; 6') ainsi que d'une matière supplémentaire de départ (34') en V ou en alliage à base de V dans le logement (18 ; 18') d'une tige de fixation (12, 14 ; 12') associée, une zone de chevauchement du logement (18 ; 18') avec la section d'extrémité de fil (6, 8 ; 6') correspondante étant mise à disposition dans la direction axiale (22) de la tige de fixation (12, 14 ; 12') concernée et la section d'extrémité de fil (6, 8 ; 6') concernée étant entourée des deux côtés par le logement (18 ; 18') par rapport à au moins une direction radiale (20) s'étendant perpendiculairement à la direction axiale;
C) chauffage d'au moins une partie de la matière supplémentaire de départ (34') de telle sorte que la matière supplémentaire (30) obtenue après le refroidissement correspondant soit reliée par complémentarité de matières à la tige de fixation (12, 14; 12') et par complémentarité de matières à la section d'extrémité de fil (6, 8 ; 6') et obtienne ainsi une liaison réalisée par complémentarité de matières entre la tige de fixation (12, 14 ; 12') et la section d'extrémité de fil (6, 8 ; 6').

12. Procédé selon la revendication 11, l'amenée de chaleur s'effectuant localement dans la région de la liaison à réaliser lors de l'étape du chauffage.

13. Procédé selon la revendication 11 ou 12, l'étape de chauffage étant réalisée par soudage par laser.

14. Procédé selon l'une quelconque des revendications 11 à 13, l'étape de chauffage étant réalisée sans que la tige de fixation (12, 14 ; 12') et la section d'extrémité de fil (6, 8 ; 6') soient comprimées l'une contre l'autre par l'intermédiaire d'une force de compression.

15. Procédé selon l'une quelconque des revendications 11 à 14, dans lequel à l'étape de chauffage, la matière de la tige de fixation (12, 14 ; 12') est fondue et forme un alliage fondu avec la matière de la matière supplémentaire de départ (34').
